# EUROPÄISCHE PATENTSCHRIFT

(11) **EP 3 947 999 B1**
(45) Veröffentlichungstag und Bekanntmachung des Hinweises auf die Patenterteilung: **12.06.2024**
(21) Anmeldenummer: 20711047.9
(22) Anmeldetag: 05.03.2020
(51) Int. Cl.: F16D 1/08

(54) **SPANNVERBINDUNG MIT EINEM AUF EINER NABE, INSBESONDERE HOHLWELLENABSCHNITT, AUFGESTECKTEN SPANNRING MIT SCHRAUBE, INSBESONDERE SPANNSCHRAUBE**
CLAMPING CONNECTION COMPRISING A CLAMPING RING MOUNTED ON A HUB, PARTICULARLY A HOLLOW SHAFT SECTION, WITH A SCREW, PARTICULARLY A CLAMPING SCREW
ASSEMBLAGE PAR SERRAGE COMPORTANT UNE BAGUE DE SERRAGE MONTÉE SUR UN MOYEU, EN PARTICULIER PARTIE D'ARBRE CREUX, ET DOTÉE D'UNE VIS, EN PARTICULIER UNE VIS DE SERRAGE,

(30) Priorität: 02.04.2019 DE 102019002364
(43) Veröffentlichungstag der Anmeldung: 09.02.2022
(73) Patentinhaber: SEW-EURODRIVE GmbH & Co. KG, 76646 Bruchsal (DE)
(72) Erfinder: HANNET, Stefan, 68723 Schwetzingen (DE); SCHILLINGER, Jens, 76437 Rastatt (DE)
(86) Internationale Anmeldenummer: PCT/EP2020/025111
(87) Internationale Veröffentlichungsnummer: WO 2020/200513

(56) Entgegenhaltungen:
- CN-A- 106 640 995
- DE-A1- 3 433 635
- JP-A- H09 329 111
- JP-Y1- S4 613 866

## Beschreibung

Die Erfindung betrifft eine Spannverbindung mit einem auf einer Nabe, insbesondere Hohlwellenabschnitt, aufgesteckten Spannring mit Schraube, insbesondere Spannschraube.

Es ist allgemein bekannt, dass eine Spannverbindung eine kraftschlüssige Verbindung ist.

Aus der CN 106 640 995 A ist eine Spannverbindung bekannt.

**Aus der** DE 34 33 635 A1 **ist eine Kupplung zwischen einer Kunststoff- und einer Metall-Werke.**

**Aus der** JP S46 13866 Y1 **ist eine kraftschlüssige Verbindung bekannt.**

**Aus der** JP H09 329111 A **ist eine Welle-Nabenverbindung bekannt.**

Der Erfindung liegt daher die Aufgabe zugrunde, eine Spannverbindung mit optimierter Kraftverteilung weiterzubilden.

Erfindungsgemäß wird die Aufgabe bei der Spannverbindung nach den in Anspruch 1 angegebenen Merkmalen gelöst.

Wichtige Merkmale der Erfindung bei der Spannvorrichtung sind, dass die Spannverbindung mit einem auf einer Nabe, insbesondere Hohlwellenabschnitt, aufgesteckten Spannring mit Schraube, insbesondere Spannschraube,
wobei eine weitere Welle, insbesondere ein Vollwellenabschnitt einer weiteren Welle, in die Nabe eingesteckt ist,
wobei der Spannring einen bezogen auf die Wellenachse axial durchgehenden und in radialer Richtung durchgehenden Schlitz aufweist,
wobei im Schlitz eine Scheibe, insbesondere Lochscheibe, angeordnet ist, durch welche die Schraube hindurchragt,
wobei Scheibe in eine in die Nabe eingebrachte Vertiefung hineinragt.

Von Vorteil ist dabei, dass der Schlitz mittels der Scheibe an derjenigen Umfangsposition festlegbar ist, welche durch die Vertiefung bestimmt ist. Denn die Vertiefung ermöglicht in Zusammenwirkung mit der Scheibe eine axiale Sicherung und eine in Umfangsrichtung wirkende Verdrehsicherung. Somit ist die am Umfang vorgesehene Kraftverteilung optimiert vorsehbar, indem bei der Montage die vorgesehene Positionierung definiert erzeugbar ist.

Erfindungsgemäß weist die Nabe zumindest einen in radialer Richtung durchgehenden Axialschlitz auf, insbesondere wobei der Axialschlitz in axialer Richtung nicht durchgehend und in Umfangsrichtung ebenfalls nicht durchgehend ausgeführt ist. Von Vorteil ist dabei, dass die Nabe beim Spannen elastischer auslenkbar ist als ohne Axialschlitz. Durch den Axialschlitz wird aber eine besondere Kraftverteilung am Umfang erzeugt. Die Positionierung in Umfangsrichtung ist somit wichtig zur Erreichung der vorgesehenen Kraftverteilung.

Bei einer vorteilhaften Ausgestaltung ist der von der Vertiefung in axialer Richtung überdeckte Bereich kleiner als der von dem Axialschlitz der Nabe in axialer Richtung überdeckten Bereich und in diesem enthalten ist,

insbesondere wobei die Vertiefung beabstandet ist von beiden axialen Endbereichen der Nabe. Von Vorteil ist dabei, dass die Vertiefung als axiale Sicherung wirken kann. Denn wenn die Vertiefung in axialer Richtung am Endbereich angeordnet wäre, also in die Umgebung münden würde, wäre die Funktion der axialen Sicherung nicht ausführbar.

Bei einer vorteilhaften Ausgestaltung ist der von der Vertiefung in Umfangsrichtung überdeckte Bereich größer als der von dem Axialschlitz der Nabe in Umfangsrichtung überdeckte Bereich und umfasst diesen. Von Vorteil ist dabei, dass die in die Vertiefung hineinragende Scheibe in tangentialer Richtung und in Umfangsrichtung gesehen breiter ist als der Axialschlitz. Somit ist die Funktion der axialen Sicherung ausführbar

Bei einer vorteilhaften Ausgestaltung ist die Vertiefung tiefer als das Spiel der Scheibe gegen die Schraube, insbesondere in radialer Richtung. Von Vorteil ist dabei, dass die Scheibe formschlüssig in der Vertiefung gehalten ist, weil die Schraube mit dem Spannring schraubverbunden ist und die Scheibe auf die Schraube mit einem derart geringen Spiel aufgesteckt ist und die Schraube derart tief in die Vertiefung hineinragt, dass trotz des Spiels zwischen Schraube und scheibe die Scheibe formschlüssig in der Vertiefung, insbesondere in axialer Richtung und in Umfangsrichtung formschlüssig in der Vertiefung, gehalten ist.

Bei einer vorteilhaften Ausgestaltung ist die Schraube tangential gerichtet, insbesondere bezogen auf die Wellenachse. Von Vorteil ist dabei, dass der Spannring in einfacher Weise auf die Welle aufschrumpfbar ist. Außerdem ist eine in Umfangsrichtung vorgesehene Verteilung der Spannkraft erreichbar.

Bei einer vorteilhaften Ausgestaltung ist der Axialschlitz der Nabe zur Umgebung hin offen ausgeführt, insbesondere also in die Umgebung mündet. Von Vorteil ist dabei, dass die Nabe elastisch verformbar ist, wobei eine vorgesehene Kraftverteilung am Umfang erzielbar ist.

Erfindungsgemäß ist die Dicke der Scheibe größer als die in tangentialer Richtung gemessene Breite des Axialschlitzes der Nabe. Von Vorteil ist dabei, dass die Scheibe formschlüssig in der Vertiefung gesichert ist, insbesondere in axialer Richtung.

Bei einer vorteilhaften Ausgestaltung ist die Vertiefung als eine in tangentialer Richtung beidseitige Verbreiterung des Axialschlitzes ausgeführt. Von Vorteil ist dabei, dass die Scheibe im Bereich des Axialschlitzes angeordnet ist und somit der Schlitz des Spannrings und der Axialschlitz der Nabe an der gleichen Umfangsstelle angeordnet ist.

Bei einer vorteilhaften Ausgestaltung ist die Vertiefung kreiszylindersegmentförmig. Von Vorteil ist dabei, dass eine einfache Herstellung mit einem drehenden Werkzeug, insbesondere mit einem Fräswerkzeug, ausführbar ist.

Wichtige Merkmale bei dem Getriebemotor mit Adapter mit einer vorgenannten Spannverbindung sind, dass
die Nabe eine Adapterwelle des Adapters ist und die weitere Welle eine Rotorwelle eines Elektromotors des Getriebemotors ist,
wobei die Adapterwelle mittels eines in einem Gehäuseteil des Adapters aufgenommenen Lagers drehbar gelagert ist.

Von Vorteil ist dabei, dass eine Motorwelle mit einer Adapterwelle verbindbar ist, wobei eine vorgesehene Kraftverteilung am Umfang erreichbar ist.

Bei einer vorteilhaften Ausgestaltung ist die Adapterwelle drehfest mit einer eintreibenden Welle eines Getriebes verbunden. Von Vorteil ist dabei, dass ein hohes Drehmoment effektiv übertragbar ist.

Die Erfindung wird nun anhand von schematischen Abbildungen näher erläutert:

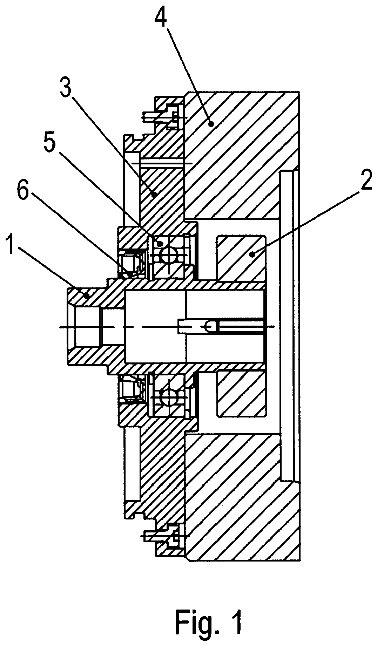

In der Figur 1 ist ein zwischen einem Elektromotor und einem Getriebe vorsehbarer Adapter im Querschnitt dargestellt, welcher eine als kraftschlüssige Welle-Nabe-Verbindung ausgeführte Spannverbindung umfasst.

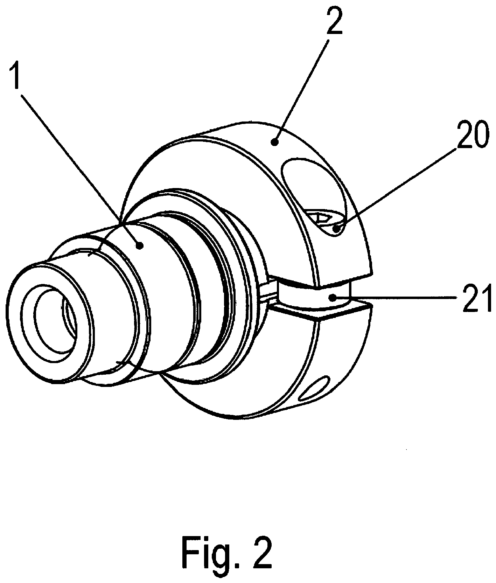

In der Figur 2 ist die Spannverbindung in Schrägansicht dargestellt.

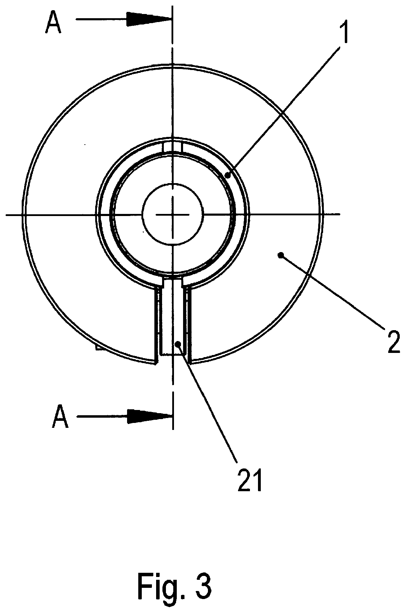

In der Figur 3 ist eine Draufsicht auf die Spannverbindung dargestellt.

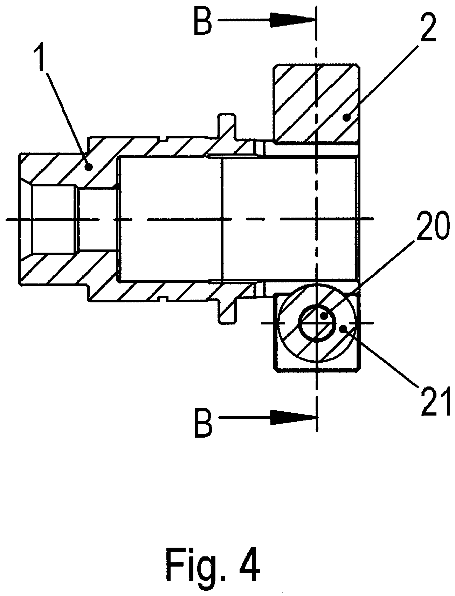

In der Figur 4 ist ein Längsschnitt durch die Spannverbindung dargestellt.

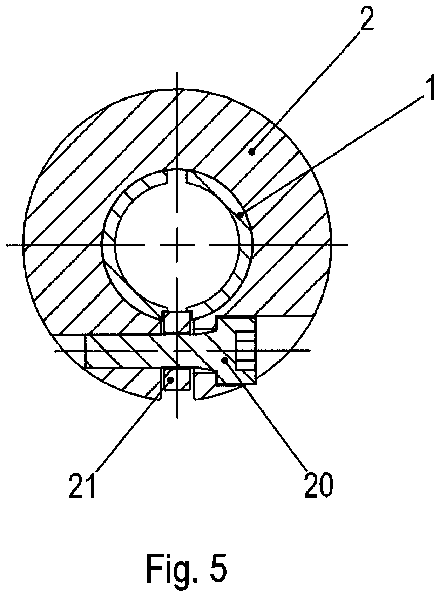

In der Figur 5 ist ein Querschnitt durch die Spannverbindung dargestellt.
In der Figur 6 ist eine Seitenansicht der den Hohlwellenabschnitt 1 aufweisenden Welle, insbesondere Adapterwelle, dargestellt.
In der Figur 7 ist ein Querschnitt durch die den Hohlwellenabschnitt 1 aufweisenden Welle dargestellt.

Wie in den Figuren dargestellt, ist auf den hohlwellenabschnitt der den Hohlwellenabschnitt 1 aufweisenden Welle ein Spannring aufgesteckt, welcher mittels einer zur Wellenachse tangential ausgerichteten Schraube 20 eine in den Hohlwellenabschnitt eingesteckte, in den Figuren nicht dargestellte Vollwelle kraftschlüssig mit dem Hohlwellenabschnitt 1 verbindet.

Die den Hohlwellenabschnitt 1 aufweisenden Welle ist auch als Nabe ausführbar oder bezeichenbar.

Die den Hohlwellenabschnitt 1 aufweisenden Welle ist mittels eines in einem ersten Gehäuseteil 3 aufgenommenen Lager 5 drehbar gelagert. Außerdem ist auch ein Wellendichtring 6 im ersten Gehäuseteil 3 aufgenommen, wobei der Wellendichtring 6 auf der äußeren Oberfläche der den Hohlwellenabschnitt 1 aufweisenden Welle läuft.

Das erste Gehäuseteil 3 ist als Adaptergehäuse ausführbar und verbindbar mit einem zweiten vorzugsweise mehrstückig ausgeführten Gehäuseteil, welches diejenigen Lager aufnimmt, mittels derer die Vollwelle drehbar gelagert ist.

Der Spannring 2 weist an seinem Umfang einen axial durch den Spannring 2 durchgehenden und in radialer Richtung durch den Spannring 2 durchgehenden Schlitz auf.

Die Schraube 20 ragt durch eine tangential gerichtete Ausnehmung des Spannrings 2 hindurch sowie durch den Schlitz und ist mit ihrem Gewindebereich in eine Gewindebohrung des Spannrings 2 eingeschraubt. Der Schlitz ist zwischen der Gewindebohrung und der Ausnehmung angeordnet.

Im Schlitz ist eine Scheibe 21, insbesondere Lochringscheibe, angeordnet, durch deren mittig in ihr angeordnetes Loch die Schraube 20 ebenfalls hindurchragt.

Bei der Montage wird zuerst die Scheibe 21 in den Schlitz eingeführt und dann die Schraube 20 durch die Ausnehmung sowie durch die Scheibe 21 durchgeschoben und dann in die Gewindebohrung eingeschraubt.

Die Scheibe 21 ist derart weit radial ausgedehnt, dass der von ihr überdeckte auf die Wellenachse bezogene Radialabstandsbereich nach radial innen überlappt mit dem vom Spannring 2 überdeckten Radialabstandsbereich. Somit ragt die Scheibe 21 nach radial innen aus dem vom Spannring 2 überdeckten Bereich hervor.

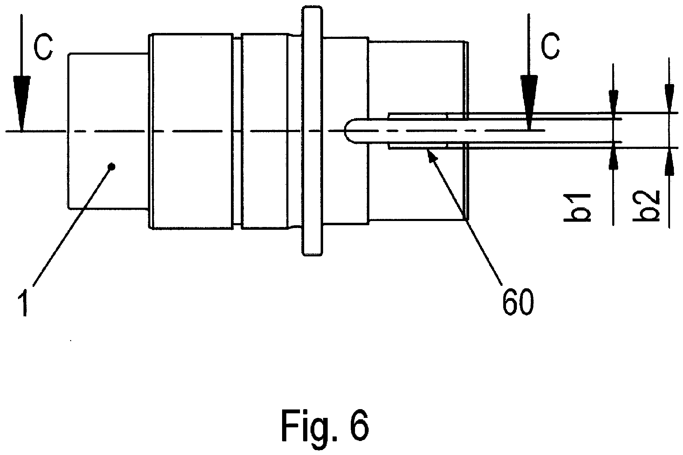

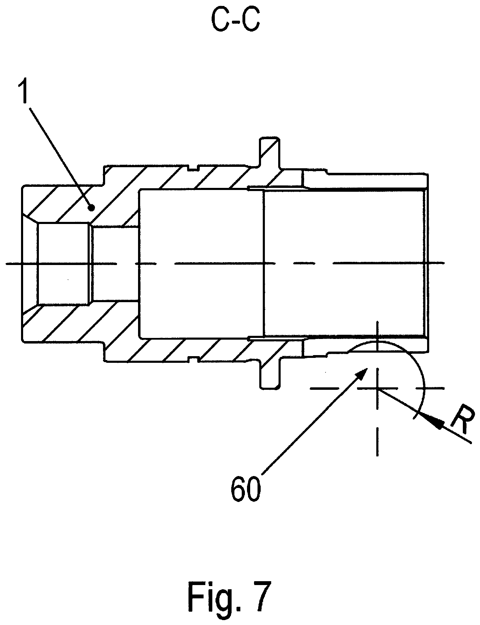

Dabei ragt sie in eine Vertiefung 60 hinein, die am äußeren Umfang des Hohlwellenabschnitts eingearbeitet ist. Diese Vertiefung 60 ist in Figur 6 und 7 erkennbar.

Der Hohlwellenabschnitt weist einen Axialschlitz auf, welcher radial durchgehend ist und axial sich bis zum Rand des Hohlwellenabschnitts erstreckt und somit in die Umgebung mündet.

Dieser Axialschlitz ist an einer Umfangsstelle ausgeführt. Ein weiterer Axialschlitz ist 180° in Umfangsrichtung beabstandet ebenfalls am hohlwellenabschnitt ausgeführt. Somit ist der hohlwellenabschnitt schon mit einer geringen Schrumpfkraft oder Spannkraft auf die Vollwelle spannbar, insbesondere aufschrumpfbar.

Der Axialschlitz weist in Umfangsrichtung oder genauer gesagt in tangentialer Richtung die Breite b1 auf.

Die Vertiefung 60 ist an derselben umfangsstelle angeordnet, wobei sie allerdings in Umfangsrichtung oder tangentialer Richtung eine Breite b2 aufweist, welche größer ist als die Breite b1.

Außerdem ist der in Umfangsrichtung von dem Axialschlitz überdeckte Umfangswinkelbereich vom in Umfangsrichtung von der Vertiefung überdeckten Umfangswinkelbereich umfasst. Die Vertiefung ist also breiter ausgeführt.

Somit ist durch die Scheibe 20 der Spannring 2 gegen Verdrehen in Umfangsrichtung gesichert.

Da die Vertiefung 60 in axialer Richtung nur innerhalb des vom Hohlwellenabschnitt überdeckten axialen Bereichs ausgedehnt ist, bewirkt die Scheibe 21 auch eine Axialsicherung des Spannrings 2.

Vorzugsweise ist die Vertiefung als kreiszylindersegmentförmige Vertiefung im hohlwellenabschnitt ausgeführt.

Dabei ist in Figur 7 der Radius R des Kreiszylinders dargestellt. Dabei ist also die Vertiefung 60 vom axialen Endbereich des Hohlwellenabschnitts beabstandet, insbesondere liegt sie im axial inneren Bereich des Hohlwellenabschnitts.

Der Axialschlitz und der weitere Axialschlitz sind zu einem einzigen axialen Endbereich des Hohlwellenabschnitts zur Umgebung hin offen. Beide sind also nicht axial vollständig durchgehend ausgeführt.

Auf diese Weise ist mittels der Scheibe 21 gesichert, dass der Axialschlitz und der Schlitz des Spannrings 2 an derselben Umfangsstelle sich befinden.

Zur Montage ist vorteilhaft, wenn der Spannring 2 zuerst auf den Hohlwellenabschnitt aufgesteckt und danach die Scheibe 21 in den Schlitz derart eingelegt wird, dass sie in die Vertiefung hineinragt und danach die Schraube 20 tangential durch die Ausnehmung und die Scheibe 21 hindurchgeführt wird und danach in die Gewindebohrung eingeschraubt wird.

Der Schraubenkopf der Schraube 21 drückt auf einen am Spannring 2 ausgebildeten Absatz, so dass der Spannring 2 derart verengt wird, dass die tangentiale Breite des Schlitzes abnimmt und die Spannkraft entsprechend zunimmt.

Die Scheibe 21 weist zur Schraube 20 nur ein geringes Spiel auf, das kleiner ist als die radiale Ausdehnung der Vertiefung 60.

Außerdem ist die Scheibe 21 im Schlitz des Spannrings 2 spielbehaftet angeordnet, insbesondere also im Schlitz in tangentialer Richtung mit Spiel angeordnet ist.

Bei weiteren erfindungsgemäßen Ausführungsbeispielen wird die Scheibe 21 im Schlitz beim Einschrauben der Schraube 20 in die Gewindebohrung vom Spannring 2 eingeklemmt, insbesondere so, dass also das Spiel verschwindet.

Auf diese Weise ist die Spannkraft, also Klemmkraft, auf einen maximalen Betrag begrenzbar.

Außerdem ist die Schraube 20 auf diese Weise gegen Überlastung schützbar, da bei Verschwinden des Spiels das notwendige Anzugsmoment der Schraube plötzlich stark ansteigt und somit das Verschwinden des Spiels deutlich und einfach erkennbar ist und/oder bei Verwendung eines Drehmomentschlüssels kein weiteres Anziehen der Schraube erfolgen kann.

Die Wellenachse ist die Drehachse der Welle.

### Bezugszeichenliste

1 Hohlwellenabschnitt
2 Spannring
3 Gehäuseteil
4 Gehäuseteil
5 Lager
6 Wellendichtring
20 Schraube
21 Scheibe, insbesondere Lochringscheibe

## Patentansprüche

1. Spannverbindung mit einem auf einer Nabe, insbesondere Hohlwellenabschnitt (1),
aufgesteckten Spannring (2) mit Schraube, insbesondere Spannschraube,
wobei eine weitere Welle, insbesondere ein Vollwellenabschnitt einer weiteren Welle, in die Nabe eingesteckt ist,
wobei der Spannring (2) einen bezogen auf die Wellenachse axial durchgehenden und in radialer Richtung durchgehenden Schlitz aufweist,
wobei im Schlitz eine Scheibe (21), insbesondere Lochscheibe, angeordnet ist, durch welche die Schraube (20) hindurchragt,
wobei die Scheibe (21) in eine in die Nabe eingebrachte Vertiefung hineinragt.
**dadurch gekennzeichnet, dass**
**die Nabe zumindest einen in radialer Richtung durchgehenden Axialschlitz aufweist,**
**wobei die Dicke der Scheibe (21) größer ist als die in tangentialer Richtung gemessene Breite des Axialschlitzes der Nabe.**

2. Spannverbindung nach Anspruch 1,
**dadurch gekennzeichnet, dass**
**der Axialschlitz** der Nabe **in axialer Richtung nicht durchgehend und in Umfangsrichtung ebenfalls nicht durchgehend ausgeführt ist.**

3. Spannverbindung nach einem der vorangegangenen Ansprüche,
**dadurch gekennzeichnet, dass**
der von der Vertiefung in axialer Richtung überdeckte Bereich kleiner ist als der von dem Axialschlitz der Nabe in axialer Richtung überdeckten Bereich und in diesem enthalten ist, insbesondere wobei die Vertiefung beabstandet ist von beiden axialen Endbereichen der Nabe.

4. Spannverbindung nach einem der vorangegangenen Ansprüche,
**dadurch gekennzeichnet, dass**
der von der Vertiefung in Umfangsrichtung überdeckte Bereich größer ist als der von dem Axialschlitz der Nabe in Umfangsrichtung überdeckte Bereich und diesen umfasst.

5. Spannverbindung nach einem der vorangegangenen Ansprüche,
**dadurch gekennzeichnet, dass**
die Vertiefung tiefer ist als das Spiel der Scheibe (21) gegen die Schraube (20), insbesondere in radialer Richtung.

6. Spannverbindung nach einem der vorangegangenen Ansprüche,
**dadurch gekennzeichnet, dass**
die Schraube (20) tangential gerichtet ist, insbesondere bezogen auf die Wellenachse.

7. Spannverbindung nach einem der vorangegangenen Ansprüche,
**dadurch gekennzeichnet, dass**
der Axialschlitz der Nabe zur Umgebung hin offen ausgeführt ist, insbesondere also in die Umgebung mündet.

8. Spannverbindung nach einem der vorangegangenen Ansprüche,
**dadurch gekennzeichnet, dass**
die Vertiefung als eine in tangentialer Richtung beidseitige Verbreiterung des Axialschlitzes ausgeführt ist.

9. Spannverbindung nach einem der vorangegangenen Ansprüche,
**dadurch gekennzeichnet, dass**
die Vertiefung kreiszylindersegmentförmig ist.

10. Getriebemotor mit Adapter mit einer Spannverbindung nach einem der vorangegangenen Ansprüche,
wobei die Nabe eine Adapterwelle des Adapters ist und die weitere Welle eine Rotorwelle eines Elektromotors des Getriebemotors ist,
**dadurch gekennzeichnet, dass**
die Adapterwelle mittels eines in einem Gehäuseteil (3, 4) des Adapters aufgenommenen Lagers (5) drehbar gelagert ist.

11. Getriebemotor nach einem der vorangegangenen Ansprüche,
**dadurch gekennzeichnet, dass**
die Adapterwelle drehfest mit einer eintreibenden Welle eines Getriebes verbunden ist.

## Claims

1. A clamping connection having a clamping ring (2), mounted on a hub, in particular a hollow shaft portion (1), with a screw, in particular a clamping screw,
wherein a further shaft, in particular a solid shaft portion of a further shaft, is inserted into the hub,
wherein the clamping ring (2) has a slot which, related to the shaft axis, is through-passing axially and through-passing in a radial direction,
wherein in the slot there is arranged a disc (21), in particular an apertured disc, through which there projects the screw (20),
wherein the disc (21) projects into a cavity made in the hub,
**characterised in that**
the hub has at the least one axial slot through-passing in a radial direction,
wherein the thickness of the disc (21) is greater than the width, measured in a tangential direction, of the axial slot of the hub.

2. A clamping connection according to claim 1,
**characterised in that**
the axial slot of the hub is not through-passing in an axial direction and likewise is not through-passing in a circumferential direction.

3. A clamping connection according to any one of the preceding claims,
**characterised in that**
the region covered in an axial direction by the cavity is smaller than the region covered in an axial direction by the axial slot of the hub and is contained therein,
in particular wherein the cavity is spaced apart from both axial end-regions of the hub.

4. A clamping connection according to any one of the preceding claims,
**characterised in that**
the region covered in a circumferential direction by the cavity is larger than the region covered in a circumferential direction by the axial slot of the hub and encompasses the latter.

5. A clamping connection according to any one of the preceding claims,
**characterised in that**
the cavity is deeper than the play of the disc (21) with respect to the screw (20), in particular in a radial direction.

6. A clamping connection according to any one of the preceding claims,
**characterised in that**
the screw (20) is directed tangentially, in particular related to the shaft axis.

7. A clamping connection according to any one of the preceding claims,
**characterised in that**
the axial slot of the hub is open towards the surroundings, in particular therefore issues to the surroundings.

8. A clamping connection according to any one of the preceding claims,
**characterised in that**
the cavity is in the form of a widening, on both sides in a tangential direction, of the axial slot.

9. A clamping connection according to any one of the preceding claims,
**characterised in that**
the cavity is in the form of a segment of a circular cylinder.

10. A geared motor with adaptor having a clamping connection according to any one of the preceding claims,
wherein the hub is an adaptor shaft of the adaptor and the further shaft is a rotor shaft of an electric motor of the geared motor,
**characterised in that**
the adaptor shaft is rotatably mounted by means of a bearing (5) received in a housing part (3, 4) of the adaptor.

11. A geared motor according to any one of the preceding claims,
**characterised in that**
the adaptor shaft is connected to an input shaft of a gear unit in a rotationally-fixed manner.

## Revendications

1. Liaison par serrage équipée d'une bague de serrage (2) emboîtée sur un moyeu, en particulier sur un tronçon d'arbre creux (1) et munie d'une vis, notamment d'une vis de serrage,
sachant qu'un arbre supplémentaire, en particulier un tronçon d'un arbre plein supplémentaire, est emboîté dans ledit moyeu,
ladite bague de serrage (2) comportant une fente axialement ininterrompue par rapport à l'axe de l'arbre, et ininterrompue dans la direction radiale,
sachant qu'un disque (21), en particulier un disque perforé intégralement traversé par la vis (20), est logé dans ladite fente,
lequel disque (21) pénètre dans un renfoncement pratiqué dans le moyeu,
**caractérisée par le fait que**
le moyeu est pourvu d'au moins une fente axiale ininterrompue dans la direction radiale,
l'épaisseur du disque (21) étant supérieure à la largeur de la fente axiale dudit moyeu, mesurée dans la direction tangentielle.

2. Liaison par serrage selon la revendication 1,
**caractérisée par le fait que**
la fente axiale du moyeu n'est pas de réalisation ininterrompue dans la direction axiale, et également pas ininterrompue dans la direction du pourtour.

3. Liaison par serrage selon l'une des revendications précédentes,
**caractérisée par le fait que**
la zone couverte par le renfoncement, dans la direction axiale, est plus petite que la zone couverte par la fente axiale du moyeu dans ladite direction axiale, et est incluse dans ladite zone,
sachant notamment que ledit renfoncement se trouve à distance des deux régions extrêmes axiales dudit moyeu.

4. Liaison par serrage selon l'une des revendications précédentes,
**caractérisée par le fait que**
la zone couverte par le renfoncement, dans la direction du pourtour, est plus grande que la zone couverte par la fente axiale du moyeu dans ladite direction du pourtour, et englobe ladite zone.

5. Liaison par serrage selon l'une des revendications précédentes,
**caractérisée par le fait que**
le renfoncement est plus profond que le jeu du disque (21) contre la vis (20), en particulier dans la direction radiale.

6. Liaison par serrage selon l'une des revendications précédentes,
**caractérisée par le fait que**
la vis (20) est orientée tangentiellement, en particulier par rapport à l'axe de l'arbre.

7. Liaison par serrage selon l'une des revendications précédentes,
**caractérisée par le fait que**
la fente axiale du moyeu est de réalisation ouverte vers l'espace environnant, c'est-à-dire qu'elle débouche notamment dans ledit espace environnant.

8. Liaison par serrage selon l'une des revendications précédentes,
**caractérisée par le fait que**
le renfoncement est conçu comme un élargissement de la fente axiale, situé de part et d'autre dans la direction tangentielle.

9. Liaison par serrage selon l'une des revendications précédentes,
**caractérisée par le fait que**
le renfoncement revêt la forme d'un segment cylindrique circulaire.

10. Motoréducteur comprenant un adaptateur doté d'une liaison par serrage conforme à l'une des revendications précédentes,
le moyeu étant un arbre dudit adaptateur, et l'arbre supplémentaire étant un arbre rotorique d'un moteur électrique dudit motoréducteur,
**caractérisé par le fait que**
l'arbre de l'adaptateur est monté à rotation au moyen d'un palier (5) logé dans une partie de carter (3, 4) dudit adaptateur.

11. Motoréducteur selon l'une des revendications précédentes,
**caractérisé par le fait que**
l'arbre de l'adaptateur est relié, avec verrouillage rotatif, à un arbre d'entrée d'une transmission.
